# EUROPÄISCHE PATENTSCHRIFT

(11) **EP 2 641 318 B1**
(45) Veröffentlichungstag und Bekanntmachung des Hinweises auf die Patenterteilung: **26.10.2016**
(21) Anmeldenummer: 11787829.8
(22) Anmeldetag: 17.11.2011
(51) Int. Cl.: H02K 5/20, H02K 9/19

(54) **ELEKTRISCHE MASCHINE**
ELECTRIC MACHINE
MOTEUR ÉLECTRIQUE

(30) Priorität: 18.11.2010 AT 19112010
(43) Veröffentlichungstag der Anmeldung: 25.09.2013
(73) Patentinhaber: AVL List GmbH, 8020 Graz (AT)
(72) Erfinder: STEINBAUER, Michael, 8510 Wald (AT); FUCKAR, Gernot, 8046 Graz (AT); BERGER, Robert, 8192 Strallegg (AT); NIMMERVOLL, Andreas, 8972 Ramsau (AT); BREGANT, Aldo, 8042 Graz (AT)
(74) Vertreter: Babeluk, Michael
(86) Internationale Anmeldenummer: PCT/EP2011/070335
(87) Internationale Veröffentlichungsnummer: WO 2012/066069

(56) Entgegenhaltungen:
- CN-A- 101 764 454
- DE-A1-102007 035 271

## Beschreibung

Die Erfindung betrifft eine elektrische Maschine, insbesondere für ein Stromerzeugungsaggregat zur Reichweitenausdehnung eines Elektrofahrzeuges, mit einem - insbesondere gusstechnisch hergestellten - zylindrischen Gehäuseteil zur Aufnahme eines Stators und eines Rotors, in welchem Gehäuseteil zumindest eine von einem Kühlmedium mäanderförmig durchströmte Kühlkanalanordnung angeordnet ist, wobei die Kühlkanalanordnung eine Mehrzahl von im Wesentlichen parallelen, sich im Wesentlichen in Achsrichtung der elektrischen Maschine erstreckende, vorzugsweise mitgegossene, Kühlkammern aufweist, welche an zumindest einer ersten Stirnseite des Gehäuseteiles offen ausgebildet sind, wobei zumindest eine Kühlkammer durch, vorzugsweise sich im Wesentlichen in Achsrichtung erstreckende, Wände begrenzt ist, und in zumindest eine Kühlkammer eine zu den Wänden beabstandete Umlenkeinrichtung eingebracht ist, und wobei die Kühlkammern mit einem Kühlraum strömungsverbunden sind, wobei der Kühlraum im Bereich der ersten Stirnseite zwischen einem Anfangsbereich und einem Endbereich ringförmig ausgebildet ist.

Die DE 100 22 146 A1 beschreibt einen Ständer mit Kühlrohren für eine elektrische Maschine mit rotierendem Innenläufer, welcher Ständer wenigstens ein Elektro-Blechpaket und mehrere mittels Vergießen angeordnete Kühlrohre aufweist, wobei die Kühlrohre in zumindest einem durch Vergießen wärmeleitenden Materials gebildeten Gusskörper eingebettet sind, der am Blechpaket anliegt und/oder von diesem umfasst ist.

Ein gegossener Formteil eines Elektromotors ist aus der EP 0 899 852 A1 bekannt. Dabei ist ein Ständergehäuse eines Elektromotors als gegossener Formteil mit mindestens einer axial durchgehenden, außerhalb der Direktverbindung der beiden Stirnseiten des Ständergehäuses verlaufenden und/oder mit mindestens einer in Axialrichtung mäander- oder wellenförmigen Gehäuseinnenrippe gebildet.

Weiters ist aus der DE 101 31 119 A1 ein Elektromotor mit Kühlschlange bekannt, welche mäanderförmig als flächenartiges Gebilde ausgebildet ist und aus gut wärmeleitendem Material sowie aus Umlenkungen aus Kunststoff besteht.

Weiters ist aus der CN 101 764 454 A1 ein Asynchronmotor bekannt, welcher einen Gehäuseteil mit einer mäanderförmig durchströmten Kühlraumanordnung mit in Achsrichtung sich erstreckenden Kühlkammern aufweist, die an einer ersten Stirnseite offen ausgebildet sind. In die Kühlkammern ist eine zu den Wänden der Kühlkammern beabstandete Umlenkeinrichtung eingebracht. Die Kühlkammern sind mit einem Kühlraum strömungsverbunden.

Bei insbesondere in einem Aluminium-Druckgussverfahren hergestellten Gehäuseteilen ist eine für eine optimale Wärmeabfuhr vorteilhafte mäanderartige Gestaltung der Kühlkanäle kaum oder nur sehr schwer mit erhöhtem gusstechnischen Aufwand zu realisieren.

Aufgabe der Erfindung ist es, diese Nachteile zu vermeiden und bei einer elektrischen Maschine auf möglichst einfache Weise eine optimale Kühlung zu erzielen.

Erfindungsgemäß wird dies dadurch erreicht, dass die Umlenkeinrichtung in eine im Bereich der ersten Stirnseite angeordnete Aufnahme des Gehäuseteiles von der ersten Stirnseite her in zumindest eine Kühlkammer eingeschoben ist.

Vorzugsweise ist die Umlenkeinrichtung durch einen Stopfen und/oder ein Leitelement gebildet.

Die aus Stopfen oder Leitrippen bestehenden Umlenkeinrichtungen können in Axialrichtung in die Kühlkammern eingeschoben werden, um damit eine mäanderartige Umlenkung des Kühlmittels zu ermöglichen.

Besonders vorteilhaft ist es, wenn die Umlenkeinrichtung lösbar in der Kühlkammer angeordnet ist, wobei vorzugsweise die Wände in Axialrichtung von der Stirnseite beabstandet sind.

Um eine ausreichende Kühlwirkung zu erzielen, können in zumindest zwei benachbarten Kühlkammern Umlenkeinrichtungen angeordnet sein.

Im Rahmen der Erfindung kann weiters vorgesehen sein, dass der Gehäuseteil stirnseitig durch einen Deckelteil abdeckbar ist, und wobei die Umlenkeinrichtung im Deckelteil angeordnet sein kann. Dabei können die Umlenkeinrichtungen lösbar im Deckelteil befestigt oder mit diesem mitgegossen sein.

Eine einfache Herstellung wird ermöglicht, wenn zumindest eine Umlenkeinrichtung den Kühlraum vorzugsweise in Achsrichtung quert. Der Ringraum kann dabei im Gehäuseteil oder im Deckelteil angeordnet sein.

Die Kühlwirkung bzw. der Durchfluss durch die einzelnen Kühlkammern kann durch Variation der Querschnitte und/oder der axialen Erstreckung der Umlenkeinrichtungen an die jeweiligen Bedürfnisse angepasst werden. Weiters kann eine verminderte Wärmeabfuhr erreicht werden, wenn nicht in jeder Kühlkammer eine Umlenkeinrichtung angeordnet wird, sondern nur in thermisch kritischen Bereichen der Kühlkanalanordnung.

Eine besonders gute Kühlwirkung lässt sich erzielen, wenn die Umlenkreinrichtung im Bereich eines der Kühlkammer zugewandten Endes eine Ablösekante ausbildet, wobei vorzugsweise ein zwischen der Ablösekante und einem Wandboden der Kühlkammer definierter Strömungsquerschnitt größer ist als ein Strömungsquerschnitt im ringförmig ausgebildeten Kühlraum. Dadurch kommt es zu Strömungsablösungen und einer turbulenten Strömung, was den Wärmetransport unterstützt.

Die Erfindung wird im Folgenden anhand der Figuren näher erläutert. Es zeigen schematisch:
- Fig. 1: ein Stromerzeugungsaggregat mit einer erfindungsgemäßen elektrischen Maschine;
- Fig. 2: einen zylindrischen Gehäuseteil in einem Schnitt gemäß der Linie II - II;
- Fig. 3: den zylindrischen Gehäuseteil in einer Stirnansicht;
- Fig. 4: und Fig. 5 eine elektroseitige Kühlkanalanordnung in jeweils einer Schrägansicht;

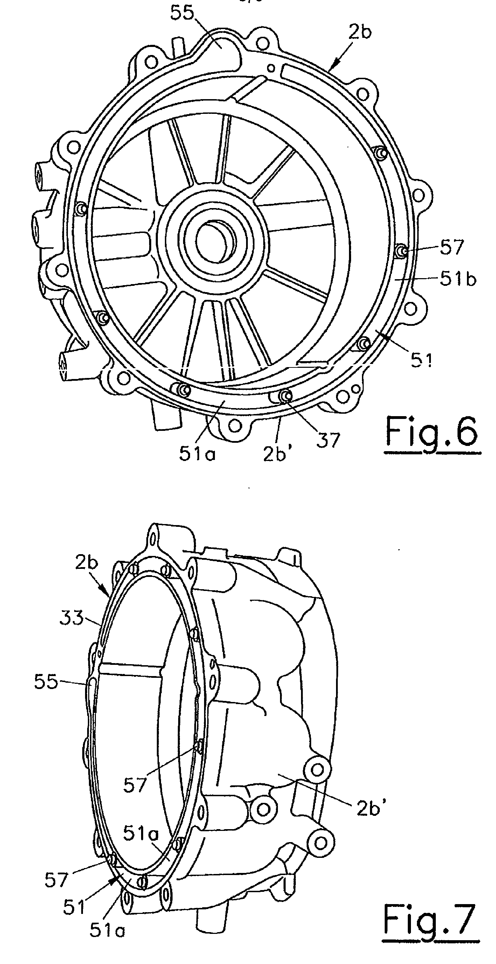

- Fig. 6: den zylindrischen Gehäuseteil in einer Schrägansicht; und
- Fig. 7: den zylindrischen Gehäuseteil in einer weiteren Schrägansicht.

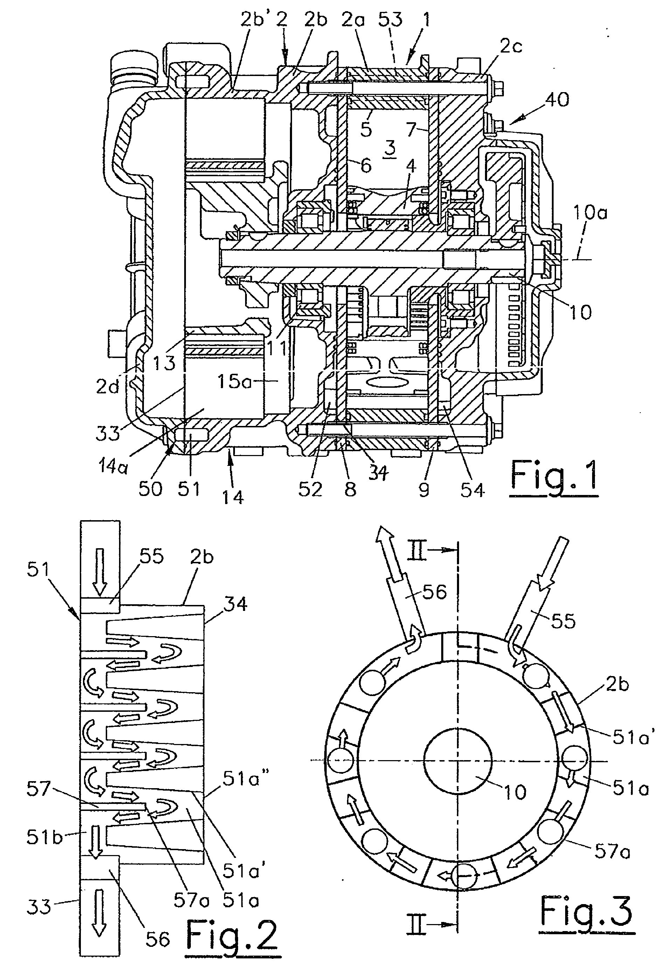

Fig. 1 zeigt ein Stromerzeugungsaggregat 40 (Range Extender), insbesondere zur Reichweitenausdehnung eines Elektrofahrzeuges, wobei in einem Gehäuse 2 eine Kreiskolbenbrennkraftmaschine 1 und eine beispielsweise permanentmagneterregte elektrische Maschine 14 angeordnet ist. Das Gehäuse 2 weist eine Kammer 3 auf, in welchem ein Kreiskolben 4 entlang einer trochoidenförmigen Lauffläche 5 des Gehäuses 2 umlaufend angeordnet ist. Die Kammer 3 wird dabei durch die trochoidenförmige Lauffläche 5 und durch seitliche Laufflächen 6, 7 gebildet. Das Gehäuse 2 weist einen die trochoidenförmige Lauffläche 5 ausbildenden zentralen Gehäuseteil 2a und seitliche Gehäuseteile 2b und 2c sowie im Ausführungsbeispiel den zentralen Gehäuseteil 2a begrenzende Seitenplatten 8, 9 auf.

In jedem der Gehäuseteile 2b, 2c ist eine in einem inneren Gehäuseraum 15 angeordnete, durch den Kreiskolben 4 angetriebene Exzenterwelle 10 über beispielsweise als Wälzlager ausgebildete Lager 11, 12 drehbar gelagert. Wellengleich mit der Exzenterwelle 10 ist der Rotor 13 der im gleichen Gehäuse 2 angeordneten elektrischen Maschine 14 ausgebildet.

Der das Lager 11 aufnehmende seitliche Gehäuseteil 2b weist einen glockenartigen, zylindrischen Mantelbereich 2b auf, welcher einen im Wesentlichen zylindrischen Innenraum 15a aufspannt, in dem der Rotor 13, sowie der Stator 14a der elektrischen Maschine 14 angeordnet ist. Der zylindrische Innenraum 15a wird durch einen in Fig. 1 an den Gehäuseteil 2b anschließenden Deckelteil 2d abgeschlossen.

Die elektrische Maschine 14 und die Kreiskolbenbrennkraftmaschine 1 weisen ein gemeinsames Kühlsystem 50 auf, wobei die in den Gehäuseteilen 2d, 2b, 2a und 2c vorgesehenen Kühlkanalanordnungen 51, 52, 53, 54 nacheinander durchströmt werden. Somit werden hintereinander die elektrische Maschine 14 und dann die Kreiskolbenbrennkraftmaschine 1 gekühlt. Ein zwischen einem Anfangsbereich 55 und einem Endbereich 56 ringförmig ausgebildeter Kühlraum 51b der elektroseitigen Kühlkanalanordnung 51 kann dabei teilweise durch den Deckelteil 2d und teilweise durch den zylindrischen Gehäuseteil 2b gebildet sein.

Im Gehäuseteil 2b sind im Bereich der elektrischen Maschine 14 eine Anzahl von in Richtung der Achse 10a der Exzenterwelle 10 sich erstreckende Kühlkammern 51a angeordnet, welche mit dem ringförmigen Kühlraum 51b im Bereich der Stirnseite 33 des Gehäuseteiles 2b strömungsverbunden sind.

Die Fig. 2 bis Fig. 5 zeigen schematisch eine elektroseitige Kühlkanalanordnung 51 des Gehäuseteiles 2b, wobei der Kühlmitteleintritt in die Kühlkanalanordnung im Anfangsbereich 55 und der Kühlmittelaustritt im Beispiel im Endbereich 56 erfolgt. Das Kühlmittel kann aber auch an anderen Stellen der Kühlmittelanordnung 51, beispielsweise Im Bereich einer Kühlkammer 51, etwa im Bereich der kolbenseitigen Stirnseite 34 des Gehäuseteils 2b zu- und/oder abgeführt werden. Die Kühlräume 51a sind - mit Ausnahme von eventuellen Zu-, Ab- oder Überströmöffnungen in andere Gehäusebereiche - im Bereich der kolbenseitigen Stirnseite 34, beispielsweise gusstechnisch oder durch einen Abdeckteil, im Wesentlichen geschlossen, so dass am Ende jeder Kühlkammer 51a eine erzwungene Umlenkung erfolgt.

In Fig. 2 ist zur Veranschaulichung der durch die Pfeile angedeuteten mäanderförmigen Strömung des Kühlmittels der Endbereich 56 in die Schnittebene und nach unten gedreht.

Um eine für die Kühlung der elektrischen Maschine 14 optimale mäanderförmige Kühlmittelströmung im den Stator 14a und den Rotor 13 umgebenden zylindrischen Mantelbereich 2b' des Gehäuseteiles 2b zu ermöglichen, sind in die Kühlkammern 51a Umlenkeinrichtungen 57 axial eingeschoben, welche Umlenkeinrichtungen 57 beispielsweise durch Stopfen 57a, Leitrippen oder dergleichen gebildet sein können. Die Umlenkeinrichtungen 57 werden beispielsweise in mitgegossene axiale Aufnahmen 37 im ringförmigen Kühlraum 51b eingeschoben. Alternativ dazu ist es auch möglich, die Umlenkeinrichtungen 57 im Deckelteil 2d lösbar oder unlösbar - beispielsweise durch Mitgießen - anzuordnen.

Durch die Umlenkeinrichtungen 57 wird das in Umfangsrichtung in den ringförmigen Kühlraum 51c einströmende Kühlmittel in Richtung der Achse 10a in die Kühlräume 51a abgelenkt und entlang der Wände 51a' wieder in den Kühlraum 51 zurückgeführt, wo es erneut durch die nächste Umlenkeinrichtung 57 in die nächste Kühlkammer abgelenkt wird. Durch diese schleifenartige Bewegung des Kühlmittels wird der für die elektrische Maschine 14 maßgebende Kühlbereich des Gehäuseteiles 2b gleichmäßig gekühlt, wobei eine Feinabstimmung der Wärmeabfuhr durch Verändern des Querschnittes und/oder der Länge der Umlenkeinrichtungen 57 erfolgen kann. Die Umlenkeinrichtungen 57 können beispielsweise aus Kunststoff oder dergleichen bestehen.

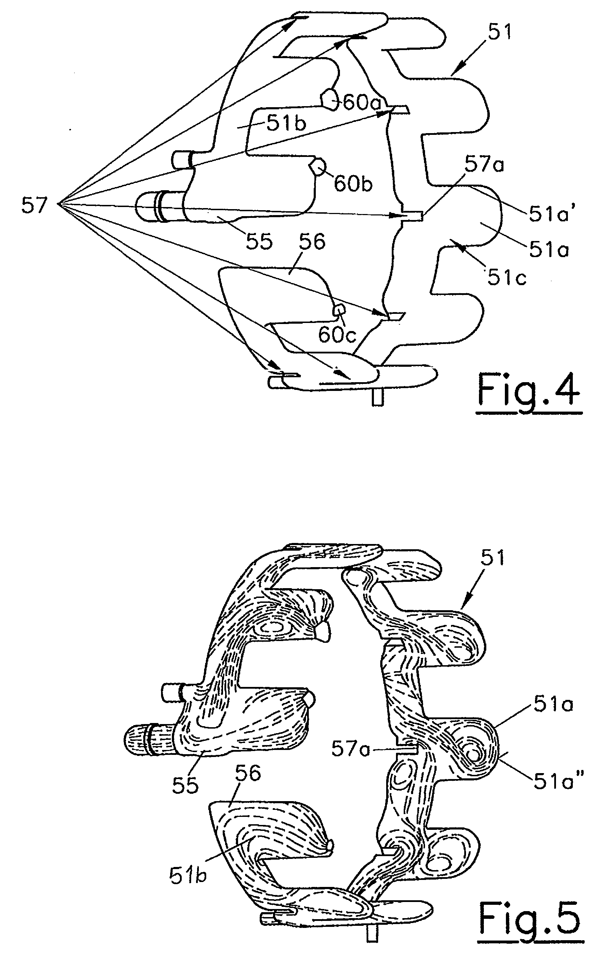

In Fig. 5 sind Stromlinien der Kühlmittelströmung im schleifenartigen Ringraum 51c dargestellt. Die Umlenkeinrichtungen 57 sind dabei nur relativ wenig, also um ein Ausmaß, welches etwa der axialen Erstreckung des Ringraumes 51b beträgt, in die Kühlkammern 51a eingeschoben. Die Umlenkreinrichtung 57 bildet eine Ablösekante 57a aus, wobei ein zwischen Ablösekante 57a und Wandboden 51a" der Kühlkammer 51a definierter Strömungsquerschnitt größer ist als ein Strömungsquerschnitt im ringförmig ausgebildeten Kühlraum 51b. Wie ersichtlich, kommt es dadurch in den Kühlkammern 51a zu Strömungsablösungen und Verwirbelungserscheinungen, wodurch in diesen Bereichen der Wärmetransport verbessert werden kann.

Die in die ringförmigen Kühlräume 51 einfahrbaren Umlenkeinrichtungen 57 ermöglichen auf eine herstellungsmäßig sehr einfache Weise eine mäanderförmige Kühlmittelströmung in dem die elektrische Maschine 14 umgebenden Gehäuseteil 2b und somit eine bestmögliche Wärmeabfuhr.

## Patentansprüche

1. Elektrische Maschine (14), insbesondere für ein Stromerzeugungsaggregat (40) zur Reichweitenausdehnung eines Elektrofahrzeuges, mit einem - insbesondere gusstechnisch hergestellten - zylindrischen Gehäuseteil (2b) zur Aufnahme eines Stators (14a) und eines Rotors (13), in welchem Gehäuseteil (2b) zumindest eine von einem Kühlmedium mäanderförmig durchströmte Kühlkanalanordnung (51) angeordnet ist, wobei die Kühlkanalanordnung (51) eine Mehrzahl von im Wesentlichen parallelen, sich im Wesentlichen in Achsrichtung der elektrischen Maschine (14) erstreckende, vorzugsweise mitgegossene, Kühlkammern (51a) aufweist, welche an zumindest einer ersten Stirnseite (33) des Gehäuseteiles (2b) offen ausgebildet sind, wobei zumindest eine Kühlkammer (51a) durch, vorzugsweise sich im Wesentlichen in Achsrichtung erstreckende, Wände (51a') begrenzt ist, und in zumindest eine Kühlkammer (51) eine zu den Wänden (51a') beabstandete Umlenkeinrichtung (57) eingebracht ist, und wobei die Kühlkammern (51a) mit einem Kühlraum (51b) strömungsverbunden sind, wobei der Kühlraum (51b) im Bereich der ersten Stirnseite (33) zwischen einem Anfangsbereich (55) und einem Endbereich (56) ringförmig ausgebildet ist, d**adurch** gekennzeichnet, dass die Umlenkeinrichtung (57) in eine im Bereich der ersten Stirnseite (33) angeordnete Aufnahme (37) des Gehäuseteiles (2b) von der ersten Stirnseite (33) her in zumindest eine Kühlkammer (51) eingeschoben ist.

2. Elektrische Maschine (14) nach Anspruch 1, **dadurch gekennzeichnet, dass** die Umlenkeinrichtung (57) durch einen Stopfen (57a) und/oder ein Leitelement gebildet ist.

3. Elektrische Maschine (14) nach Anspruch 1 oder 2, **dadurch gekennzeichnet, dass** die Umlenkeinrichtung (57) lösbar in der Kühlkammer (51a) angeordnet ist.

4. Elektrische Maschine (14) nach einem der Ansprüche 1 bis 3, **dadurch gekennzeichnet, dass** die Wände (51a') in Achsrichtung von der ersten Stirnseite (33) beabstandet sind.

5. Elektrische Maschine (14) nach einem der Ansprüche 1 bis 4, **dadurch gekennzeichnet, dass** der Gehäuseteil (2b) im Bereich der ersten Stirnseite (33) durch einen Deckelteil (2d) abdeckbar ist, wobei vorzugsweise die Umlenkeinrichtung (57) im Deckelteil (2d) angeordnet ist.

6. Elektrische Maschine (14) nach Anspruch 5, **dadurch gekennzeichnet, dass** die Umlenkeinrichtung (57) mit dem gusstechnisch hergestellten Deckelteil (2d) mitgegossen ist.

7. Elektrische Maschine (14) nach einem der Ansprüche 1 bis 6, **dadurch gekennzeichnet, dass** zumindest eine Umlenkeinrichtung (57) den Kühlraum (51b) in Achsrichtung quert.

8. Elektrische Maschine (14) nach einem der Ansprüche 1 bis 7, **dadurch gekennzeichnet, dass** in zumindest zwei benachbarten Kühlkammern (51a) jeweils eine Umlenkeinrichtung (57) angeordnet ist.

9. Elektrische Maschine (14) nach einem der Ansprüche 1 bis 8, **dadurch gekennzeichnet, dass** zumindest zwei Unlenkeinrichtungen (57) unterschiedliche Querschnitte und/oder axiale Erstreckungen aufweisen.

10. Elektrische Maschine (14) nach einem der Ansprüche 1 bis 9, **dadurch gekennzeichnet, dass** die Umlenkreinrichtung (57) eine Ablösekante (57a) ausbildet, wobei vorzugsweise ein zwischen Ablösekante (57a) und Wandboden (51a") der Kühlkammer (51a) definierter Strömungsquerschnitt größer ist als ein Strömungsquerschnitt im ringförmig ausgebildeten Kühlraum (51b).

11. Elektrische Maschine (14) nach einem der Ansprüche 1 bis 10, **dadurch gekennzeichnet, dass** die Kühlkammern (51a) im Bereich einer der Umlenkeinrichtung abgewandten zweiten Stirnseite (34) des Gehäuseteils (2b) im Wesentlichen und/oder überwiegend geschlossen ausgeführt sind.

12. Stromerzeugungsaggregat (40), insbesondere zur Reichweitenausdehnung eines Elektrofahrzeuges, mit einer elektrischen Maschine (14) nach einem der Ansprüche 1 bis 11, wobei die elektrische Maschine (14) wellengleich mit einer Brennkraftmaschine, insbesondere einer Kreiskolbenbrennkraftmaschine (1) in einem gemeinsamen Gehäuse (2) angeordnet ist.

## Claims

1. An electric machine (14), especially for a current generating unit (40) for extending the range of an electric vehicle, comprising a cylindrical housing part (2b), especially produced by casting, for accommodating a stator (14a) and a rotor (13), said housing part (2b) containing at least one cooling channel arrangement (51) through which a coolant flows in a meandering manner, wherein the cooling channel arrangement (51) comprises a plurality of substantially parallel cooling chambers (51a) which extend substantially in the axial direction of the electric machine (14), which are preferably co-cast and which are provided with an open configuration on at least one first front side (33) of the housing part (2b), wherein at least one cooling chamber (51a) is defined by walls (51a') preferably extending substantially in the axial direction, and a deflecting device (57) which is spaced from the walls (51a') is introduced into at least one cooling chamber (51) from the first front side (33), wherein the cooling chambers (51a) are flow-connected to a cooling chamber (51b), wherein the cooling chamber (51b) is arranged in an annular way in the region of the first front side (33) between an initial area (55) and an end area (56), **characterised in that** the deflecting device (57) is inserted into a receiver (37) of the housing part (2b), said receiver being arranged in the region of the first front side (33), from the first front side (33) in at least one cooling chamber (51).

2. An electric machine (14) according to claim 1, **characterised in that** the deflecting device (57) is formed by a plug (57a) and/or a guide element.

3. An electric machine (14) according to claim 1 or 2, **characterised in that** the deflecting device (57) is detachably arranged in the cooling chamber (51a).

4. An electric machine (14) according to one of the claims 1 to 3, **characterised in that** the walls (51a') are spaced in the axial direction from the first front side (33).

5. An electric machine (14) according to one of the claims 1 to 4, **characterised in that** the housing part (2b) can be covered in the region of the first front side (33) by a cover part (2d), wherein preferably the deflecting device (57) is arranged in the cover part (2d).

6. An electric machine (14) according to claim 5, **characterised in that** the deflecting device (57) is cast simultaneously with the cover part (2d) that is produced by casting.

7. An electric machine (14) according to one of the claims 1 to 6, **characterised in that** at least one deflecting device (57) crosses the cooling chamber (51b) in the axial direction.

8. An electric machine (14) according to one of the claims 1 to 7, **characterised in that** one respective deflecting device (57) is arranged in at least two adjacent cooling chambers (51a).

9. An electric machine (14) according to one of the claims 1 to 8, **characterised in that** at least two deflecting devices (57) have different cross sections and/or axial extensions.

10. An electric machine (14) according to one of the claims 1 to 9, **characterised in that** the deflecting device (57) forms a separation edge (57a), wherein preferably a flow cross section defined between the separation edge (57a) and the wall base (51a") of the cooling chamber (51a) is greater than a flow cross section in the annularly arranged cooling chamber (51b).

11. An electric machine (14) according to one of the claims 1 to 10, **characterised in that** the cooling chambers (51a) are arranged in a substantially and/or mainly closed form in the region of a second front side (34) of the housing part (2b) facing away from the deflecting device.

12. A current generating unit (40), especially for extending the range of an electric vehicle, comprising an electric machine (14) according to one of the claims 1 to 11, wherein the electric machine (14) is arranged coaxially with an internal combustion engine, especially a rotary-piston internal combustion engine (1), in a common housing (2).

## Revendications

1. Machine électrique (14) en particulier destinée à un ensemble de production de courant (40) pour permettre d'augmenter l'autonomie d'un véhicule électrique, comprenant une partie de carter cylindrique (2b) en particulier fabriqué par la technique de coulée destinée à recevoir un stator (14a) et un rotor (13), et dans laquelle est monté au moins un dispositif de canal de refroidissement (51) dans lequel circule en forme de méandres un agent de refroidissement, le dispositif de canal de refroidissement (51) comportant un ensemble de chambres de refroidissement (51a) essentiellement parallèles s'étendant essentiellement dans la direction axiale de la machine électrique (14), et de préférence coulées conjointement, qui sont ouvertes sur au moins une première face frontale (33) de la partie de carter (2b), au moins une chambre de refroidissement (51a) étant limitée par des parois (51a') s'étendant de préférence essentiellement en direction axiale, et dans au moins une chambre de refroidissement (51) étant monté un dispositif de déviation (57) situé à distance des parois (51a'), les chambres de refroidissement (51a) étant en liaison fluidique avec un volume de refroidissement (51b), ce volume de refroidissement (51b) étant réalisé en forme annulaire dans la zone de la première face frontale (33) entre une zone de départ (55) et une zone d'extrémité finale (56),
**caractérisée en ce que**
le dispositif de changement de direction (57) est introduit dans au moins une chambre de refroidissement (51) dans un logement de réception de la partie de carter (2b) situé dans la zone de la première face frontale (33) à partir de cette première face frontale (33).

2. Machine électrique (14) conforme à la revendication 1,
**caractérisée en ce que**
le dispositif de changement de direction (57) est formé par un tampon (57a) et/ou un élément de guidage.

3. Machine électrique (14) conforme à la revendication 1 ou 2, **caractérisée en ce que**
le dispositif de changement de direction (57) est monté amovible dans la chambre de refroidissement (51a).

4. Machine électrique (14) conforme à l'une des revendications 1 à 3, **caractérisée en ce que**
les parois (51a') sont situées à distance de la première face frontale (33) en direction axiale.

5. Machine électrique (14) conforme à l'une des revendications 1 à 4, **caractérisée en ce que**
dans la zone de la première face frontale (33) la partie de carter (2b) peut être recouverte par une partie de recouvrement (2b) et de préférence le dispositif de changement de direction (57) est monté dans la partie de recouvrement (2d).

6. Machine électrique (14) conforme à la revendication 5,
**caractérisée en ce que**
le dispositif de changement de direction (57) est coulé conjointement à la partie de recouvrement (2d) réalisée par la technique de coulée.

7. Machine électrique (14) conforme à l'une des revendications 1 à 6,
**caractérisée en ce qu'**
au moins un dispositif de changement de direction (57) traverse le volume de refroidissement (51b) en direction axiale.

8. Machine électrique (14) conforme à l'une des revendications 1 à 7,
**caractérisée en ce qu'**
un dispositif de changement de direction (57) est respectivement monté dans au moins deux chambres de refroidissement voisines (51a).

9. Machine électrique (14) conforme à l'une des revendications 1 à 8,
**caractérisée en ce qu'**
au moins deux dispositifs de changement de direction (57) ont des sections différentes et/ou des extensions axiales différentes.

10. Machine électrique (14) conforme à l'une des revendications 1 à 9,
**caractérisée en ce que**
le dispositif de changement de direction (57) forme une arête de transfert (57a), et de préférence la section d'écoulement définie entre l'arête de transfert (57a) et le fond de paroi (51a") de la chambre de refroidissement (51a) est supérieure à la section d'écoulement dans le volume de refroidissement annulaire (51b).

11. Machine électrique (14) conforme à l'une des revendications 1 à 10,
**caractérisée en ce que**
dans la zone d'une seconde face frontale (34) de la partie de carter (2b) située à l'opposé du dispositif de changement de direction les chambres de refroidissement (51a) sont essentiellement et/ou principalement fermées.

12. Ensemble de production de courant (40) en particulier pour augmenter l'autonomie d'un véhicule électrique comprenant une machine électrique (14) conforme à l'une des revendications 1 à 11, cette machine électrique (14) étant montée avec la même ondulation qu'un moteur à combustion interne, en particulier un moteur à combustion interne à pistons circulaires (1) dans un carter commun (2).
